# EUROPEAN PATENT SPECIFICATION

(11) **EP 4 420 805 B1**
(45) Date of publication and mention of the grant of the patent: **07.10.2026**
(21) Application number: 22910452.6
(22) Date of filing: 18.08.2022
(51) Int. Cl.: G01N 3/20, G01N 3/28, B21D 22/02, B21D 22/20, B21D 22/00, B21D 5/00

(54) **PRESS FORMED PART FRACTURE DETERMINATION METHOD AND PRESS FORMED PART FRACTURE COUNTERMEASURE DECISION METHOD**
VERFAHREN ZUR BEURTEILUNG DES BRUCHS IN EINEM PRESSGEFORMTEN TEIL UND VERFAHREN ZUR BESTIMMUNG VON BRUCHGEGENMASSNAHME IN DEM PRESSGEFORMTEN TEIL
PROCÉDÉ D'ÉVALUATION D'UNE RUPTURE DANS UNE PIÈCE FORMÉE À LA PRESSE, ET PROCÉDÉ DE DÉTERMINATION D'UNE CONTRE-MESURE DE RUPTURE DANS UNE PIÈCE FORMÉE À LA PRESSE

(30) Priority: 24.12.2021 JP 2021210128
(43) Date of publication of application: 28.08.2024
(73) Proprietor: JFE Steel Corporation, Tokyo 100-0011 (JP)
(72) Inventor: YAMAGUCHI, Naoki, Tokyo 100-0011 (JP); SHIOZAKI, Tsuyoshi, Tokyo 100-0011 (JP)
(74) Representative: Haseltine Lake Kempner LLP
(86) International application number: PCT/JP2022/031206
(87) International publication number: WO 2023/119724

(56) References cited:
- WO-A1-2017/131042
- GB-A- 1 489 257
- JP-A- 2015 047 605
- JP-A- 2015 047 605
- JP-A- 2020 040 111
- JP-A- 2020 040 111
- JP-B2- 6 766 365

## Description

### Field

The present invention relates to a press formed part fracture determination method, which is a method of determining a fracture occurring in a press formed part in which a fracture has occurred or is predicted to occur by press forming of a metal sheet, and a press formed part fracture countermeasure decision method, which is a method of deciding a countermeasure for a fracture of a press formed part based on the fracture determination.

### Background

A fracture having a size of several millimeters occurring in a press formed part obtained by press forming of a metal sheet not only deteriorates the appearance of the press formed part, but also can lead to a brittle fracture or a fatigue fracture. Therefore, it is desirable to have no such fractures. In order to prevent fractures of a press formed part, techniques related to prediction and evaluation of occurrence of fracture during press forming have been proposed. For example, Patent Literature 1 discloses a method of evaluating a bending inner fracture on a bend inner side at the time of unbending deformation after bending deformation of a metal sheet material, and a technique of predicting occurrence of such a bending inner fracture. Patent Literature 2 discloses a technique of evaluating bending cracking at a sheared edge when a target press formed component is manufactured by performing press forming on a metal sheet subjected to shearing.

### Citation List

### Patent Literature

Patent Literature 1: JP 5900751 B2
Patent Literature 2: WO 2020/174841 A
Reference may also be made to published patent application JP 2020-40111 A which relates to a deformation limit evaluation method, crack prediction method and press metal mold design method.

### Non Patent Literature

Non Patent Literature 1: Tetsuo NAKA, Hideaki MURAKAMI, Tomoaki HASHIMOTO, Effect of Stretching Force for Spring Back of High Strength Steel Sheets under Bending, Memoirs of the Yuge National College of Maritime Technology, No. 34 (2012), p. 1
Non Patent Literature 2: Toru YOSHIDA, Tomohisa KATAYAMA, Koji HASHIMOTO, Yukihisa KURIYAMA, Shape Control Techniques for High Strength Steel in Sheet Metal Forming, Shinnittetsu giho (Nippon Steel Technical Report), No. 378 (2003), 9.25

### Summary

### Technical Problem

In typical cases, a fracture of a size of several millimeters occurring during press forming is caused by a microscopic crack (hereinafter, referred to as a micro crack) of a size of several tens of micrometers arising at a portion where the fracture occurs in a press formed part. In order to take a countermeasure to suppress or prevent the occurrence of fractures, there is a need to grasp the occurrence of micro cracks during press forming (bending).

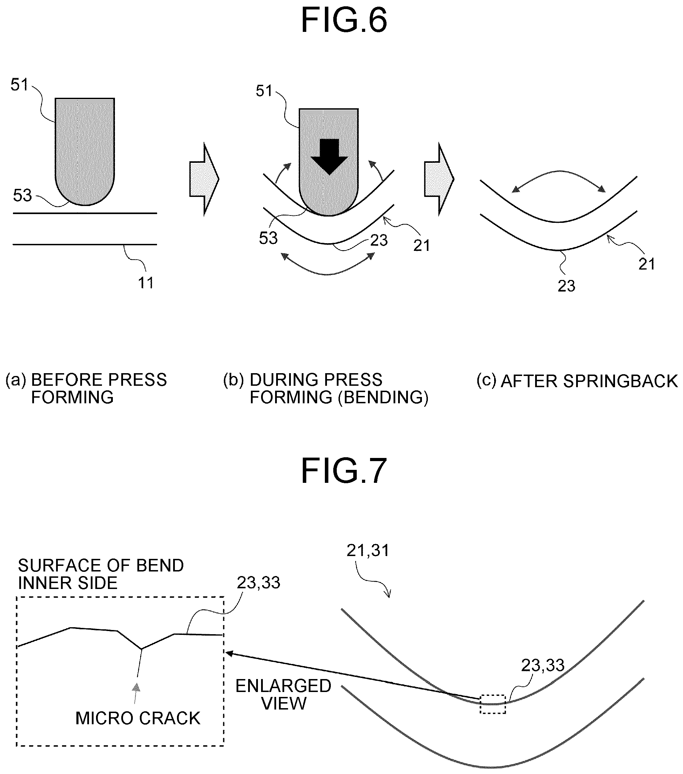

FIG. 6 illustrates a press formed part 21 obtained by bending a metal sheet 11. As a result of intensive studies on fractures that occur during press forming, the inventors have found that the occurrence of fractures is divided into Case (1) being a case where a fracture occurs in a bent portion 23 that is bent during press forming and Case (2) being a case where a fracture occurs in the bent portion 23 during springback of the press formed part 21 after die release of the part from a press-forming die after press forming. In addition, the fracture during the press forming in Case (1) is caused by a micro crack occurring on a surface of the bent portion 23 on the bend inner side as illustrated in FIG. 7 when strain generated in the bent portion 23 during the bend forming of the metal sheet 11 exceeds a fracture limit value. In contrast, the fracture during springback in Case (2) occurs in a manner such that an action of strong compressive stress generated on the surface of the bent portion 23 on the bend inner side during the press forming brings about the brittleness of the metal sheet, and an initial defect of the metal sheet or a micro crack that has occurred in the bent portion 23 during the press forming leads to the occurrence of the fracture, triggered by the reversal of the compressive stress to the tensile stress due to the springback. In this manner, since the fracture during the press forming and the fracture during the springback have different occurrence mechanisms, it is also necessary to take different countermeasures to suppress the fracture that has occurred in the press formed part.

However, the techniques disclosed in Patent Literature 1 and Patent Literature 2 have no ways to determine whether the micro crack leading to a fracture has occurred during press forming or during springback. Therefore, when it is determined, for example, that a fracture has occurred due to occurrence of a micro crack during press forming even though a fracture has occurred during springback, there has been difficulty in taking an effective fracture countermeasure, specifically, a countermeasure for suppressing the fracture that has occurred in the press formed part.

The present invention has been made to solve the above problems, and one object of the present invention is to provide a press formed part fracture determination method capable of determining whether a fracture has occurred during press forming of a metal sheet or has occurred during springback of a press formed part in which the fracture has occurred or is predicted to occur by press forming of the metal sheet. Another object of the present invention is to provide a press formed part fracture countermeasure decision method capable of deciding a fracture countermeasure to be taken for suppressing a fracture in the press formed part based on a determination result.

### Solution to Problem

The present invention is defined by the appended claims. A press formed part fracture determination method according to the present invention decides a countermeasure for a fracture occurring in a press formed part in which a fracture has occurred or a fracture is predicted to occur by press forming of a metal sheet, and includes: a stress state reproduction test process of reproducing, by press forming of a test piece of the metal sheet, a stress state in a press forming process of a fracture occurrence portion where a fracture has occurred or a fracture is predicted to occur, in the press formed part, and determining occurrence/non-occurrence of a micro crack in a stress state reproduction portion of the test piece; and a fracture determination process of determining, when it is determined that a micro crack has occurred in the stress state reproduction portion of the test piece in the stress state reproduction test process, that there is a fracture that has occurred in the press formed part in the press forming process, and determining, when it is determined that there is no occurrence of a micro crack in the stress state reproduction portion of the test piece, that there is a fracture that has occurred in springback of the press formed part after press forming.

The stress state reproduction test process may include: a stress state reproduction press forming step of reproducing a stress state of the fracture occurrence portion in the press formed part by performing press forming of the test piece; and a micro crack occurrence/non-occurrence determination step of determining occurrence/non-occurrence of a micro crack in the stress state reproduction portion of the test piece, the stress state reproduction press forming step may include: a forming load application step of, using a press-forming die including a punch, a die, a forming load application portion that applies a forming load to the punch or the die, and a forming load retention portion that retains a forming state in which the forming load is being applied, pushing the punch toward the die by the forming load application portion in a state where the test piece is disposed between the punch and the die, and reproducing a stress state of the fracture occurrence portion of the press formed part on the test piece; and a forming state retention step of retaining, by the forming load retention portion, a forming state in which a stress state of the fracture occurrence portion has been reproduced by applying the forming load to the test piece in the forming load application step, and the micro crack occurrence/non-occurrence determination step may include a test piece microscopic observation step of determining occurrence/non-occurrence of a micro crack by performing microscopic observation of a cross section or a side surface of the stress state reproduction portion in the test piece retaining the forming state.

The press formed part may include a bent portion formed by bending the metal sheet, and the bent portion may be the fracture occurrence portion.

A press formed part fracture countermeasure decision method according to the present invention decides a fracture countermeasure to be taken for a press formed part in which a fracture has occurred or a fracture is predicted to occur by press forming of a metal sheet, the decision made by using the press formed part fracture determination method according to the present invention, and includes a fracture countermeasure decision process of deciding, when it is determined, in the fracture determination process, that there is a fracture in a press forming process of the press formed part, a countermeasure for suppressing occurrence of a micro crack at the fracture occurrence portion in the press forming process of the press formed part as a countermeasure for a fracture of the press formed part, and deciding, when it is determined that there is a fracture of the press formed part in springback after press forming, a countermeasure for suppressing the springback of the press formed part after press forming as a countermeasure for the fracture of the press formed part.

### Advantageous Effects of Invention

In the present invention, the fracture occurring in the press formed part can be distinguished and determined as to whether the fracture is a fracture occurring in a press forming process or a fracture occurring at the time of springback after press forming. This makes it possible to decide a fracture countermeasure to be taken to effectively suppress the occurrence of fractures in the press formed part. In addition, according to the present invention, by preliminarily deciding a fracture countermeasure for a portion where there is a risk of occurrence of fractures in the press formed part at a design stage of the press formed part, it is possible to efficiently improve the performance of the press formed part.

### Brief Description of Drawings

FIG. 1 is a flowchart illustrating a flow of processing of a press formed part fracture determination method according to a first embodiment of the present invention.
FIG. 2 is a view illustrating a step of reproducing a stress state of a press formed part having a fracture by conducting press forming of a test piece in a press formed part fracture determination method according to the first embodiment of the present invention.
FIG. 3 is a flowchart illustrating a flow of processing of a press formed part fracture countermeasure decision method according to a second embodiment of the present invention.
FIG. 4 is a flowchart illustrating a flow of processing of a press formed part fracture countermeasure decision method according to another aspect of the second embodiment of the present invention.
FIG. 5 is a view illustrating a press formed part as a forming target in Examples.
FIG. 6 is a view illustrating a fracture occurring in a press formed part applicable in the present invention (including: ((a) Before press forming; (b) During press forming; and (c) After springback).
FIG. 7 is a view illustrating a micro crack occurring in a bent portion of a press formed part obtained by bending.

### Description of Embodiments

### [First embodiment]

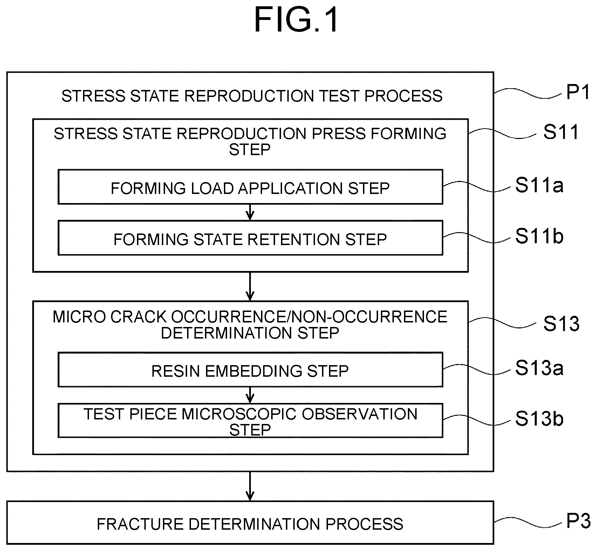

A press formed part fracture determination method according to a first embodiment of the present invention is a method as a basis for deciding a countermeasure for a fracture occurring in a press formed part in which a fracture has occurred by press forming of a metal sheet, and includes a stress state reproduction test process P1 and a fracture determination process P3 as illustrated in FIG. 1. As illustrated in FIG. 6, the following will describe a case where a press formed part 21 includes a bent portion 23 formed by bending a metal sheet 11 using a press-forming die 1 and where a fracture occurs in the bent portion 23.

### <Stress state reproduction test process>

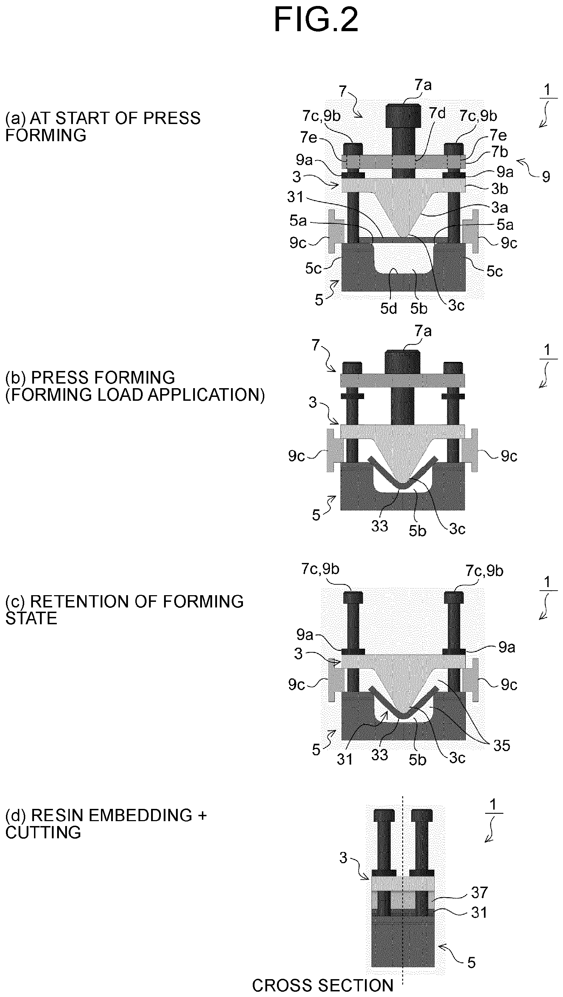

In the stress state reproduction test process P1, the stress state in the press forming process of the bent portion 23, which is the fracture occurrence portion in the press formed part 21, is reproduced as an example by performing press forming of a test piece 31 of the metal sheet as illustrated in FIG. 2. The stress state reproduction test process P1 determines occurrence/non-occurrence of a micro crack in a stress state reproduction portion 33 of the test piece 31.

In the present embodiment, as illustrated in FIG. 1, the stress state reproduction test process P1 includes a stress state reproduction press forming step S11 and a micro crack occurrence/non-occurrence determination step S13.

### <<Stress state reproduction press forming step>>

The stress state reproduction press forming step S11 is a step of reproducing the stress state of the bent portion 23, which is a fracture occurrence portion in the press formed part 21, by performing press forming of the test piece 31, and includes a forming load application step S11a and a forming state retention step S11b as illustrated in FIG. 1.

### (Forming load application step)

As illustrated in FIG. 2, the forming load application step S11a uses the press-forming die 1 including: a punch 3; a die 5; a forming load application portion 7 that applies a forming load to the punch 3; and a forming load retention portion 9 that retains a forming state in which the forming load is being applied. The forming load application step S11a applies a forming load to the punch 3 to perform press forming of the test piece 31, and reproduces the stress state of the bent portion 23, which is a fracture occurrence portion of the press formed part 21, on the test piece 31.

In the present embodiment, as illustrated in FIGS. 2(a) to 2(b), the forming load application step S11a performs V-shaped free bend forming on the test piece 31 using the press-forming die 1, thereby forming a stress state reproduction portion 33 reproducing the stress state of the bent portion 23 of the press formed part 21.

As illustrated in FIG. 2(a), the forming load application portion 7 includes a bolt for forming 7a, a support plate 7b, and a bolt for supporting 7c. The support plate 7b has, on its center, a threaded screw hole 7d to be engaged with the bolt for forming 7a, and has, at its four corners, through holes 7e through which the bolts for supporting 7c are to be inserted.

As illustrated in FIG. 2(a), the forming load retention portion 9 includes a fixing nut 9a, a bolt for supporting 9b, and a spacer 9c. The bolt for supporting 9b is a similar to the bolt for supporting 7c of the forming load application portion 7.
as illustrated in fig. 2(a), the punch 3 includes: a work portion 3a being a protruding portion making a V-shaped protrusion in a press forming direction; and a punch base portion 3b that comes in contact with the bolt for forming 7a and receives a forming load. As illustrated in FIG. 6, the curvature of a tip rounded portion 3c of the work portion 3a is the curvature of a bending portion 53 for forming the bent portion 23 of the press formed part 21 in a press-forming die 51 used for the press forming of the press formed part 21.

In addition, the bending angle at which the test piece 31 is bent into a V shape is set by preliminarily deciding the pushing amount of the punch 3, which is equivalent to the bending angle of the bent portion 23 of the press formed part 21, by a preliminary test or numerical analysis, and inserting, between the punch 3 and the die 5, a spacer 9c having a length that actualizes the pushing amount.

As illustrated in FIG. 2(a), the die 5 includes: a shoulder portion 5a that supports the test piece 31; a recess 5b that allows the punch 3 and the test piece 31 to escape; and a die base 5c to which the bolt for supporting 7c of the forming load application portion 7 is fixed.

The bending radius of the shoulder portion 5a, which is not to be particularly limited, is to be preferably decided to be equal to or larger than the thickness of the test piece 31 so as not to cause galling of press die. The depth of the recess 5b is to be preferably decided so as not to allow the test piece 31 to come into contact with a bottom 5d after the punch 3 is pushed by a predetermined pushing amount.

In the present embodiment, the forming load application step S11a first disposes the test piece 31 between the punch 3 and the die 5, and then applies a forming load to the punch 3 by the bolt for forming 7a to push the punch 3 into the recess 5b of the die 5. Subsequently, the forming load application step S11a performs V-shaped free bend forming of the test piece 31 to form a stress state reproduction portion 33 reproducing the stress state of the bent portion 23 of the press formed part 21.

### (Forming state retention step)

As illustrated in FIG. 2(c), the forming state retention step S11b retains, by the forming load retention portion 9, the test piece 31 in the formed state reproducing the stress state of the bent portion 23 of the press formed part 21 in the forming load application step S11a.

In the present embodiment, as illustrated in FIG. 2(c), after bending is performed onto the test piece 31 to a predetermined bending angle in the forming load application step S11a, the fixing nut 9a is tightened. This operation achieves retention of a forming state where the stress state of the bent portion 23 of the press formed part 21 is reproduced in the stress state reproduction portion 33.

### <<Micro crack occurrence/non-occurrence determination step>>

The micro crack occurrence/non-occurrence determination step S13 is a step of determining occurrence/non-occurrence of a micro crack in the stress state reproduction portion 33 of the test piece 31. In the present embodiment, as illustrated in FIG. 1, the micro crack occurrence/non-occurrence determination step S13 includes a resin embedding step S13a and a test piece microscopic observation step S13b.

### (Resin embedding step)

As illustrated in FIG. 2(d), the resin embedding step S13a fills a gap 35 between the test piece 31 retained in the forming state reproducing the stress state of the bent portion 23 of the press formed part 21 in the stress state reproduction press forming step S11, and the punch 3 and the die 5, with a resin, and then, embeds the test piece 31 in a resin 37.

An example of the resin 37 in which the test piece 31 is to be embedded in the resin embedding step S13a can be a conductive resin. Observation can be performed without using a conductive resin. However, observation of a crack of several tens of µm is desirably performed by using an electron microscope, and it is necessary to use a conductive resin when observing with an electron microscope.

### (Test piece microscopic observation step)

The test piece microscopic observation step S13b is a step of performing microscopic observation of the stress state reproduction portion 33 of the test piece 31 and determining occurrence/non-occurrence of a micro crack.

In the present embodiment, the test piece 31 embedded in the resin 37 in the resin embedding step S13a is cut to expose a cross section of the stress state reproduction portion 33 of the test piece 31, and the exposed cross section is polished before microscopic observation is performed. With this procedure, the test piece 31 can be easily cut to allow its cross section to be observed.

### <Fracture determination process>

When it is determined in the stress state reproduction test process P1 that a micro crack has occurred in the stress state reproduction portion 33 of the test piece 31, the fracture determination process P3 determines that fracture has occurred in the press formed part 21 in the press forming process. In contrast, when it is determined that there is no occurrence of a micro crack in the stress state reproduction portion 33 of the test piece 31, the fracture determination process P3 determines that the fracture of the press formed part 21 occurred in the springback after the press forming.

In this manner, the press formed part fracture determination method according to the first embodiment makes a determination regarding the press formed part 21 in which a fracture has occurred by press forming of a metal sheet, specifically reproduces the stress state of the bent portion 23, which is a fracture occurrence portion, by performing press forming of the test piece 31, and determines occurrence/non-occurrence of a micro crack in the stress state reproduction portion 33 of the test piece 31. This makes it possible to distinguish and determine as to whether the fracture is a fracture occurring in a press forming process or a fracture occurring at the time of springback after press forming.

In the above description, a forming load is applied to the punch 3. In the present invention, however, it is also allowable to provide a forming load application portion that applies a forming load to the die 5. In this case, a forming load is applied to the die 5 to move the die 5 to the punch 3 side, thereby performing press forming of the test piece 31.

In addition, the first embodiment includes the micro crack occurrence/non-occurrence determination step S13 in which the test piece 31 retained in the forming state is embedded in the resin 37 (S13a), the test piece 31 embedded in the resin 37 is cut to expose the cross section of the stress state reproduction portion 33 of the test piece 31, and the exposed cross section is polished and then undergoes microscopic observation (S13b), thereby determining occurrence/non-occurrence of a micro crack in the stress state reproduction portion 33.

Note that the press formed part fracture determination method according to the present invention may be a method of observing a cross section by cutting the test piece 31 without embedding the test piece 31 retained in the forming state in a resin, or may be a method of observing a side surface of the stress state reproduction portion 33 without cutting the test piece 31 when a micro crack has occurred on the side surface of the test piece 31.

In addition, the press formed part fracture determination method according to the present invention may be any method as long as a stress state when a fracture occurs in the bent portion 23, which is a fracture occurrence portion of the press formed part 21, is reproduced on the stress state reproduction portion 33 of the test piece 31. Therefore, the method is not limited to retention of the forming state of the test piece 31 at the forming bottom dead center of the press-forming die 1, but it is also allowable to retain the forming state during forming.

The press formed part fracture determination method according to the present invention is not limited to a method in which V-shaped free bend forming is performed on the test piece 31 using the press-forming die 1 as in the stress state reproduction test process P1 of the present embodiment described above. The press forming method of the test piece is not limited as long as it is possible to reproduce the stress state of the fracture occurrence portion of the press formed part in which fracture has occurred or fracture is predicted to occur.

### [Second embodiment]

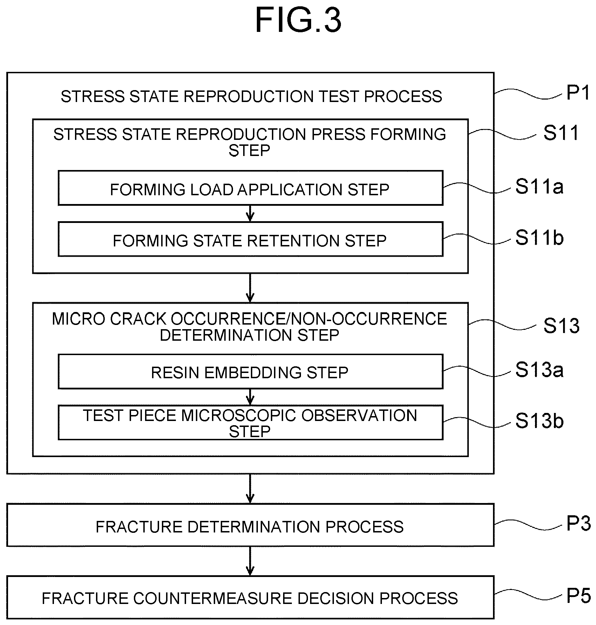

A press formed part fracture countermeasure decision method according to a second embodiment of the present invention uses the press formed part fracture determination method according to the first embodiment described above to decide a fracture countermeasure to be taken on a press formed part in which a fracture has occurred by press forming of a metal sheet. As illustrated in FIG. 3, the press formed part fracture countermeasure decision method according to the second embodiment of the present invention includes a fracture countermeasure decision process P5. Hereinafter, similarly to the first embodiment described above, a case where a fracture occurs in the bent portion 23 of the press formed part 21 illustrated in FIG. 6 will be described.

### <Fracture countermeasure decision process>

When it is determined in the fracture determination process P3 that the fracture has occurred in the press forming process of the press formed part 21, the fracture countermeasure decision process P5 decides, as a fracture countermeasure for the press formed part 21, a countermeasure for suppressing occurrence of a micro crack in the bent portion 23 which is a fracture occurrence portion in the press forming process of the press formed part 21. In contrast, when it is determined in the fracture determination process P3 that the fracture has occurred in the springback of the press formed part 21 after the press forming, the fracture countermeasure decision process P5 decides a countermeasure for suppressing the springback of the press formed part 21 after the press forming, as a countermeasure for the fracture of the press formed part 21.

In the second embodiment, as illustrated in FIG. 3, the fracture countermeasure decision process P5 decides the fracture countermeasure according to the fracture determination in the fracture determination process P3 based on the occurrence/non-occurrence determination of the micro crack of the test piece 31 in the test piece microscopic observation step S13b.

The countermeasure for suppressing the occurrence of micro cracks in the press forming process is not particularly limited. For example, as described in Patent Literature 1, the strain or stress of a press formed part during press forming can be defined as a reference, and press forming can be performed so as to generate the strain or stress defined as the reference.

The countermeasure for suppressing the springback after the press forming is not particularly limited. For example, it is possible to apply, as described in Non Patent Literature 1, a countermeasure such as applying a tensile force at the time of bending or after bending or applying a compressive force at the time of bending or after bending, and possible to apply, as described in Non Patent Literature 2, a countermeasure such as using a reverse bent phenomenon occurring in a clearance of a tool (press-forming die), changing tension of a vertical wall in a forming process, or applying a compressive stress in a sheet thickness direction at the forming bottom dead center, referred to as bottoming.

It should be noted, as a countermeasure to suppress the springback, that it is not preferable to take a countermeasure to suppress the springback of the entire press formed part in combination with a spring-go or the like around the fracture occurrence portion of the press formed part. This is because the fracture occurring at the fracture occurrence portion due to the springback is caused only by the local springback at the fracture occurrence portion, and the springback at the fracture occurrence portion will not necessarily be suppressed even with a countermeasure for suppressing the springback of the entire press formed part.

As described above, the press formed part fracture countermeasure decision method according to the second embodiment makes a determination regarding the press formed part 21 in which fracture has occurred by press forming of a metal sheet so as to distinguish and determine as to whether the fracture is a fracture occurring in a press forming process or a fracture occurring at the time of springback after press forming. This makes it possible to decide a fracture countermeasure to be taken to effectively suppress the occurrence of fractures in the press formed part.

In the second embodiment, the press formed part 21 has the bent portion 23 formed by bending a metal sheet, and the technique is applicable to a case where a fracture occurs in the bent portion 23. However, the present invention is not limited to the bent portion formed by bending. As for the occurrence of a fracture in a portion formed by another forming method, by reproducing a stress state of the portion and determining occurrence/non-occurrence of a micro crack, it is also possible to appropriately decide a fracture countermeasure for suppressing the occurrence of a fracture in a press formed part. For example, a tensile load is generated also in drawing, having a possibility of occurrence of bending inner fracture even with a lower risk of occurrence of fracture than the case of a bent portion in bending. Therefore, the present invention is applicable to a bent portion formed by drawing.

### [Other aspects]

The first embodiment and the second embodiment described above are described to be applied to a case where a fracture occurs in a press formed part obtained by actually performing press forming of a metal sheet.

However, the present invention may be a technique of determining presence/absence of a micro crack in a test piece reproducing a stress state of a fracture occurrence portion in a press formed part predicted to have a fracture by a press forming fracture prediction method (Patent Literature 1 or the like) so as to determine the occurrence of the fracture by distinguishing the fracture due to press forming and the fracture due to springback, and may further be a technique of deciding a fracture countermeasure for the press formed part according to the determination.

In addition, the above is a technique of determining, in the stress state reproduction test process, the occurrence of fracture in the press forming process and the occurrence of fracture due to the springback after the press forming to be distinguished from each other based on occurrence/non-occurrence of a micro crack in the stress state reproduction portion of the test piece reproducing the stress state.

As another aspect of the press formed part fracture determination method according to the first embodiment, the fracture determination process may be a process in which, when it is determined that there is no occurrence of a micro crack in the stress state reproduction portion 33 of the test piece 31 retaining the forming state, the forming load application step S11a of reproducing the stress state of the bent portion 23 of the press formed part 21 in the test piece 31 is performed again, unloading of the forming load is performed without retaining the forming state of the test piece 31 in which the stress state is reproduced so as to allow the test piece 31 to undergo springback, and occurrence/non-occurrence of the micro crack is determined by performing microscopic observation of the cross section or the side surface of the stress state reproduction portion 33.

In the other aspect of the press formed part fracture determination method according to the first embodiment, when it is determined that there is occurrence of a micro crack in the stress state reproduction portion 33 of the test piece 31 undergoing springback, the fracture is determined to be a fracture that occurred in the springback of the press formed part 21 after the press forming. In contrast, in a case where it is determined that there is no occurrence of a micro crack, it is determined, in the other aspect, that there is no fracture in the press forming process of the press formed part 21 or in the springback after the press forming.

Furthermore, as another aspect of the press formed part fracture countermeasure decision method according to the second embodiment, the technique may include a fracture countermeasure decision process that includes decision of a fracture countermeasure to be applied to the press formed part 21 having an occurrence of a fracture or predicted to have an occurrence of a fracture by press forming of a metal sheet by using the other aspect of the press formed part fracture determination method according to the first embodiment. Specifically, the fracture countermeasure decision process is a process of deciding a countermeasure for a fracture of a press formed part, based on the fracture determination in the fracture determination process in the other aspect of the press formed part fracture determination method according to the

### first embodiment.

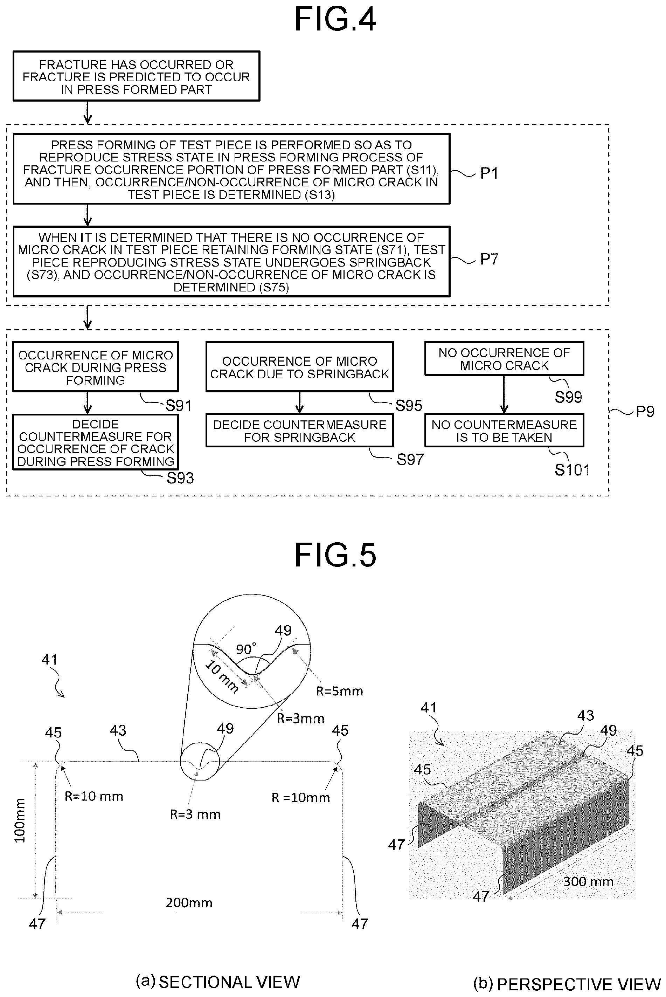

A specific procedure of the other aspect of the press formed part fracture countermeasure decision method according to the second embodiment will be described with reference to FIG. 4.

As an initial step in the other aspect, similarly to the stress state reproduction test process P1 of the first embodiment described above, press forming of the test piece 31 is performed, as illustrated in FIG. 2, so as to reproduce the stress state in the press forming process of the bent portion 23 which is the fracture occurrence portion of the press formed part 21 (S11), and then a determination of occurrence/non-occurrence of a micro crack in the stress state reproduction portion 33 of the test piece 31 is performed (S13).

As a next step of the other aspect, when there is no occurrence of a micro crack in the stress state reproduction portion 33 of the test piece 31 (S71), the test piece 31 reproducing the stress state undergoes springback (S73), and then a determination of the presence/absence of a micro crack in the stress state reproduction portion 33 of the test piece 31 by the springback is performed (S75).

In order to determine occurrence/non-occurrence of a micro crack in the stress state reproduction portion 33 of the test piece 31 due to the springback of the test piece 31, a procedure is to be taken, as illustrated in FIG. 2, in which, after press forming of the test piece 31, the bolt for forming 7a is loosened without retaining the forming state so as to allow the test piece 31 to springback, and then the test piece 31 is taken out to observe the stress state reproduction portion 33. At this time, the test piece 31 may be embedded in the resin 37. When a micro crack is observed in the stress state reproduction portion 33, it is determined to have an occurrence of a fracture due to springback. In contrast, when no micro crack is observed in the stress state reproduction portion 33 of the springback test piece 31, it is determined to have no occurrence of fracture in the bent portion 23 of the press formed part 21.

When the stress state reproduction portion 33 of the test piece 31 reproducing the stress state is determined to have an occurrence of a micro crack, and this micro crack is determined as a fracture in the press forming process of the press formed part 21 (S91), a countermeasure for suppressing the occurrence of the micro crack in the bent portion 23, which is the fracture occurrence portion in the press forming process of the press formed part 21, is decided as a fracture countermeasure for the press formed part 21 (S93).

In contrast, when the test piece 31 undergoing springback has a micro crack and this micro crack is determined to be a fracture of the press formed part 21 during the springback after the press forming (S95), a countermeasure for suppressing the springback of the press formed part 21 after the press forming is decided as a fracture countermeasure for the press formed part 21 (S97).

Furthermore, when the bent portion 23 of the press formed part 21 is predicted to have an occurrence of fracture, but it is determined that there is no fracture in the press forming process of the press formed part 21 or at the springback after the press forming (S99), it is considered that no fracture occurs in the bent portion 23 of the press formed part 21, and thus it is decided that nothing is to be performed as a fracture countermeasure (S101).

In this manner, by performing preliminary decision of the fracture countermeasure for the fracture occurrence portion where the fracture is predicted to occur in the press formed part at the design stage before manufacturing the press formed part, it is possible to efficiently improve the performance of the press formed part.

### [Example]

An experiment performed for confirming operational effects of the present invention will be described below. In the present Example, press forming was performed on a press formed part 41 as illustrated in FIG. 5 using two types of metal sheets (metal sheet A and metal sheet B) having different tensile strengths as test materials. The press formed part 41 has a substantially U-shaped cross section including a top portion 43 and a pair of side wall portions 47 continuous from both ends of the top portion 43 via bent portions 45, including a bent recess 49 formed in the top portion 43. As a step of forming the press formed part 41, first, the metal sheet A and the metal sheet B were bent in the first forming step to form a bent recess 49 on each sheet. Subsequently, in the second forming step, the metal sheet A and the metal sheet B each having the bent recess 49 were bent to form the bent portions 45. The bent recess 49 had a bending radius of 3 mm and a bending angle of 90°. The bent portion 45 had a bending radius of 10 mm and a bending angle of 90°. When occurrence/non-occurrence of a fracture in the press formed part 41 was checked, a fracture had occurred at the bend inner side of the bent recess 49.

Correspondingly, using the press-forming die 1 illustrated in FIG. 2, press forming, specifically, V-shaped free bend forming, was performed on the test piece 31 of each of the metal sheet A and the metal sheet B so as to reproduce the stress state of the bent recess 49, which is the fracture occurrence portion in the press formed part 41.

The radius of curvature of a tip rounded portion 3c of the punch 3 of the press-forming die 1 was set to 3 mm, and the length of the spacer 9c was set so that the bending angle of the test piece 31 after the bending was 90 degrees. Subsequently, the cross section of the test piece 31 was observed visually or microscopically for each of the test piece 31 in which the forming state after the bending was retained and the test piece 31 which was taken out of the press-forming die 1 without retaining the forming state so as to undergo springback, and occurrence/non-occurrence of a fracture was determined on each case.

When occurrence of a micro crack was observed in the test piece 31 retaining the forming state, it was determined that a fracture occurred during press forming. In contrast, when no micro crack was observed in the test piece 31 retaining the forming state and occurrence of a micro crack was observed only in the test piece 31 after springback, it was determined that a fracture occurred by the springback.

When a micro crack having a length of 50 µm or more was observed in both the test piece 31 retaining the forming state and the test piece 31 that has undergone springback, it was determined that a micro crack had occurred. Tables 1 and 2 illustrate the determination results on occurrence/non-occurrence of a micro crack in the test piece 31 of each of the metal sheet A and the metal sheet B.

**Table 1**

| Metal sheet A | Visual observation | Microscopic observation |
|---|---|---|
| During press forming (at forming bottom dead center) | ○ | × |
| After springback | ○ | × |

| | | |
|---|---|---|
| (∘:Absence of micro crack, ×:Presence of micro crack) | | |

**Table 2**

| Metal sheet B | Visual observation | Microscopic observation |
|---|---|---|
| During press forming (at forming bottom dead center) | ○ | ○ |
| After springback | ○ | × |

| | | |
|---|---|---|
| (∘:Absence of micro crack, ×:Presence of micro crack) | | |

As illustrated in Table 1, regarding the test piece 31 of the metal sheet A, no micro crack was visually observed, but occurrence of a micro crack was confirmed by microscopic observation. Based on this, it was determined that a micro crack occurred in the test piece 31 of the metal sheet A during press forming. FIG. 7 illustrates a schematic view of a micro crack that occurred in the test piece 31 of the metal sheet A. The micro crack occurred at the bottom of the irregularity on the surface on the bend inner side of the stress state reproduction portion 33 in the state at the forming bottom dead center. Accordingly, for the press formed part 41 using the metal sheet A, a countermeasure for suppressing the occurrence of micro cracks in the press forming process was decided as a countermeasure for the occurrence of fractures.

Therefore, in the present Example, as a countermeasure for the occurrence of fractures in the press formed part 41 using the metal sheet A, the bending radius of the bent recess 49 of the press formed part 41 was to be changed from 3 mm to 4 mm. As a result, by alleviating the strain generated on the bend inner side of the bent recess 49, press forming of the press formed part 41 was successfully performed without causing a fracture in the bent recess 49.

On the other hand, as illustrated in Table 2, regarding the test piece 31 of the metal sheet B, no micro crack was observed in the stress state reproduction portion 33 in visual observation or microscopic observation in a state of retaining the forming state. However, in a microscopic observation of the stress state reproduction portion 33 of the test piece 31 subjected to springback, occurrence of a micro crack was observed at the bend inner side of the stress state reproduction portion 33 (refer to FIG. 7). Accordingly, for the press formed part 41 using the metal sheet B, a countermeasure for suppressing springback was decided as a countermeasure for the occurrence of fracture.

Correspondingly, the present Example took a countermeasure in which the bent portion 45 of the press formed part 41 is bent to form the top portion 43 and the side wall portion 47, and then, as described in Non Patent Literature 1, in order to apply a tensile force at the time of bending, the bent recess 49 is formed by stretch-expand forming on the top portion 43 (the bent recess 49 is bent while restricting the flow of the material of the top portion 43). By applying a tensile force, it is possible to suppress the occurrence of buckling and wrinkles on the surface on the bend inner side, leading to suppression of occurrence of micro cracks. With this countermeasure, the bent recess 49 is formed by tensile bending to which a tensile force is applied in the forming process. As a result, press forming of the press formed part 41 was successfully performed without causing occurrence of a fracture in the bent recess 49.

### Industrial Applicability

According to the present invention, it is possible to provide a press formed part fracture determination method capable of determining whether a fracture has occurred during press forming of a metal sheet or has occurred during springback in a press formed part in which the fracture has occurred or is predicted to occur by press forming of the metal sheet. In addition, according to the present invention, it is possible to provide a press formed part fracture countermeasure decision method capable of deciding a fracture countermeasure to be taken for suppressing a fracture in the press formed part based on a determination result.

### Reference Signs List

- 1: PRESS-FORMING DIE
- 3: PUNCH
- 3a: WORK PORTION
- 3b: PUNCH BASE PORTION
- 3c: TIP ROUNDED PORTION
- 5: DIE
- 5a: SHOULDER PORTION
- 5b: RECESS
- 5c: DIE BASE
- 5d: BOTTOM
- 7: FORMING LOAD APPLICATION PORTION
- 7a: BOLT FOR FORMING
- 7b: SUPPORT PLATE
- 7c: BOLT FOR SUPPORTING
- 7d: THREADED SCREW HOLE
- 7e: THROUGH HOLE
- 9: FORMING LOAD RETENTION PORTION
- 9a: FIXING NUT
- 9b: BOLT FOR SUPPORTING
- 9c: SPACER
- 11: METAL SHEET
- 21: PRESS FORMED PART
- 23: BENT PORTION
- 31: TEST PIECE
- 33: STRESS STATE REPRODUCTION PORTION
- 35: GAP
- 37: RESIN
- 41: PRESS FORMED PART
- 43: TOP PORTION
- 45: BENT PORTION
- 47: SIDE WALL PORTION
- 49: BENT RECESS
- 51: PRESS-FORMING DIE
- 53: BENDING PORTION

## Claims

1. A press formed part fracture determination method for deciding a countermeasure for a fracture occurring in a press formed part (21) in which a fracture has occurred or a fracture is predicted to occur by press forming of a metal sheet (11), the method comprising:
a stress state reproduction test process (P1) of reproducing, by press forming of a test piece (31) of the metal sheet (11), a stress state in a press forming process of a fracture occurrence portion (23) where a fracture has occurred or a fracture is predicted to occur, in the press formed part (21), and determining occurrence/non-occurrence of a micro crack in a stress state reproduction portion (33) of the test piece (31); and
a fracture determination process (P3) of determining, when it is determined that a micro crack has occurred in the stress state reproduction portion (33) of the test piece (31) in the stress state reproduction test process (P1), that there is a fracture that has occurred in the press formed part (21) in the press forming process, and determining, when it is determined that there is no occurrence of a micro crack in the stress state reproduction portion (33) of the test piece (31), that there is a fracture that has occurred in springback of the press formed part (21) after press forming, wherein
the stress state reproduction test process (P1) includes:
a stress state reproduction press forming step (S11) of reproducing a stress state of the fracture occurrence portion (23) in the press formed part (21) by performing press forming of the test piece (31); and
a micro crack occurrence/non-occurrence determination step (S13) of determining occurrence/non-occurrence of a micro crack in the stress state reproduction portion of the test piece;
the stress state reproduction press forming step (S11) includes:
a forming load application step (S11a) of, using a press-forming die (1) including a punch (3), a die (5), a forming load application portion (7) that applies a forming load to the punch (3) or the die (5), and a forming load retention portion (9) that retains a forming state in which the forming load is being applied, pushing the punch (3) toward the die (5) by the forming load application portion (7) in a state where the test piece (31) is disposed between the punch (3) and the die (5), and reproducing a stress state of the fracture occurrence portion (23) of the press formed part (21) on the test piece (31); and
a forming state retention step (S11b) of retaining, by the forming load retention portion (9), a forming state in which a stress state of the fracture occurrence portion (23) has been reproduced by applying the forming load to the test piece (31) in the forming load application step (S11a); and
the micro crack occurrence/non-occurrence determination step (S13) includes a test piece microscopic observation step (S13b) of determining occurrence/non-occurrence of a micro crack by performing microscopic observation of a cross section or a side surface of the stress state reproduction portion (33) in the test piece (31) retaining the forming state.

2. The press formed part fracture determination method according to claim 1, wherein the press formed part (21) includes a bent portion (23) formed by bending the metal sheet, and the bent portion (23) is the fracture occurrence portion.

3. A press formed part fracture countermeasure decision method of deciding a fracture countermeasure to be taken for a press formed part (21) in which a fracture has occurred or a fracture is predicted to occur by press forming of a metal sheet (11), the decision made by using the press formed part fracture determination method according to claim 1 or 2, the press formed part fracture countermeasure decision method comprising:
a fracture countermeasure decision process (P5) of deciding, when it is determined, in the fracture determination process (P3), that there is a fracture in a press forming process of the press formed part (21), a countermeasure for suppressing occurrence of a micro crack at the fracture occurrence portion (23) in the press forming process of the press formed part (21) as a countermeasure for a fracture of the press formed part (21), and deciding, when it is determined that there is a fracture of the press formed part (21) in springback after press forming, a countermeasure for suppressing the springback of the press formed part (21) after press forming as a countermeasure for the fracture of the press formed part (21).

## Patentansprüche

1. Pressformteilbruchbeurteilungsverfahren zum Festlegen einer Gegenmaßnahme gegen einen Bruch, der in einem Pressformteil (21) auftritt, in dem durch Pressformen eines Metallblechs (11) ein Bruch aufgetreten ist oder das Auftreten eines Bruchs vorhergesagt ist, das Verfahren umfassend:
einen Spannungszustandsreproduktionsprüfvorgang (P1) zum Reproduzieren, durch Pressformen eines Prüfstücks (31) des Metallblechs (11), eines Spannungszustands bei einem Pressformvorgang eines Bruchauftrittsabschnitts (23), in dem in dem Pressformteil (21) ein Bruch aufgetreten ist oder das Auftreten eines Bruchs vorhergesagt ist, und zum Beurteilen eines Auftretens/Nichtauftretens eines Mikrorisses in einem Spannungszustandsreproduktionsabschnitt (33) des Prüfstücks (31); und
einen Bruchbeurteilungsvorgang (P3) zum Beurteilen dahingehend, dass, wenn festgestellt wird, dass bei dem Spannungszustandsreproduktionsprüfvorgang (P1) ein Mikroriss in dem Spannungszustandsreproduktionsabschnitt (33) des Prüfstücks (31) aufgetreten ist, ein Bruch vorliegt, der bei dem Pressformvorgang in dem Pressformteil (21) aufgetreten ist, und zum Beurteilen dahingehend, dass, wenn festgestellt wird, dass in dem Spannungszustandsreproduktionsabschnitt (33) des Prüfstücks (31) kein Auftreten eines Mikrorisses vorliegt, ein Bruch vorliegt, der bei der Rückfederung des Pressformteils (21) nach dem Pressformen aufgetreten ist, wobei
der Spannungszustandsreproduktionsprüfvorgang (P1) beinhaltet:
einen Spannungszustandsreproduktionspressformschritt (S11) zum Reproduzieren eines Spannungszustands des Bruchauftrittsabschnitts (23) in dem Pressformteil (21) durch Durchführen eines Pressformens des Prüfstücks (31); und
einen Mikrorissauftritts-/Mikrorissnichtauftrittsbeurteilungsschritt (S13) zum Beurteilen eines Auftretens/Nichtauftretens eines Mikrorisses in dem Spannungszustandsreproduktionsabschnitt des Prüfstücks;
wobei der Spannungszustandsreproduktionspressformschritt (S11) beinhaltet:
einen Formlastaufbringschritt (S11a) zum Drücken, unter Verwendung eines Pressformwerkzeugs (1) beinhaltend einen Stempel (3), eine Matrize (5), einen eine Formlast auf den Stempel (3) oder die Matrize (5) aufbringenden Formlastaufbringabschnitt (7) und einen einen Formzustand, in welchem die Formlast aufgebracht wird, aufrechterhaltenden Formlastaufrechterhaltungsabschnitt (9), des Stempels (3) in Richtung der Matrize (5) durch den Formlastaufbringabschnitt (7) in einem Zustand, in dem das Prüfstück (31) zwischen dem Stempel (3) und der Matrize (5) angeordnet ist, und zum Reproduzieren eines Spannungszustands des Bruchauftrittsabschnitts (23) des Pressformteils (21) an dem Prüfstück (31); und
einen Formzustandsaufrechterhaltungsschritt (S11b) zum Aufrechterhalten, durch den Formlastaufrechterhaltungsabschnitt (9), eines Formzustands, in dem ein Spannungszustand des Bruchauftrittsabschnitts (23) durch Aufbringen der Formlast auf das Prüfstück (31) in dem Formlastaufbringschritt (S11a) reproduziert wurde; und
wobei der Mikrorissauftritts-/Mikrorissnichtauftrittsbeurteilungsschritt (S13) einen Prüfstückmikroskopbeobachtungsschritt (S13b) zum Beurteilen eines Auftretens/Nichtauftretens eines Mikrorisses durch Durchführen einer Mikroskopbeobachtung eines Querschnitts oder einer Seitenoberfläche des Spannungszustandsreproduktionsabschnitts (33) in dem Prüfstück (31), das den Formzustand aufrechterhält, beinhaltet.

2. Pressformteilbruchbeurteilungsverfahren nach Anspruch 1, wobei das Pressformteil (21) einen durch Biegen des Metallblechs geformten gebogenen Abschnitt (23) beinhaltet und der gebogene Abschnitt (23) der Bruchauftrittsabschnitt ist.

3. Pressformteilbruchgegenmaßnahmenfestlegungsverfahren zum Festlegen einer Bruchgegenmaßnahme, die für ein Pressformteil (21) ergriffen werden soll, in dem durch Pressformen eines Metallblechs (11) ein Bruch aufgetreten ist oder ein Auftreten eines Bruchs vorhergesagt ist, wobei die Festlegung durch Verwenden des Pressformteilbruchbeurteilungsverfahrens nach Anspruch 1 oder 2 erfolgt, das Pressformteilbruchgegenmaßnahmenfestlegungsverfahren umfassend:
einen Bruchgegenmaßnahmenfestlegungsvorgang (P5) zum Festlegen, wenn bei dem Bruchbeurteilungsvorgang (P3) festgestellt wird, dass ein Bruch bei einem Pressformvorgang des Pressformteils (21) vorliegt, einer Gegenmaßnahme zum Unterbinden eines Auftretens eines Mikrorisses an dem Bruchauftrittsabschnitt (23) bei dem Pressformvorgang des Pressformteils (21) als Gegenmaßnahme gegen einen Bruch des Pressformteils (21) und zum Festlegen, wenn festgestellt wird, dass ein Bruch des Pressformteils (21) bei der Rückfederung nach einem Pressformen vorliegt, einer Gegenmaßnahme zum Unterbinden der Rückfederung des Pressformteils (21) nach dem Pressformen als Gegenmaßnahme gegen den Bruch des Pressformteils (21).

## Revendications

1. Procédé d'évaluation d'une rupture dans une pièce formée à la presse pour déterminer une contre-mesure en cas de rupture survenant dans une pièce formée à la presse (21) dans laquelle une rupture s'est produite ou une rupture est susceptible de se produire lors du formage à la presse d'une tôle métallique (11), le procédé comprenant :
un processus d'essai de reproduction d'état de contrainte (P1) consistant à reproduire, par formage à la presse d'une éprouvette (31) de la tôle métallique (11), un état de contrainte lors d'un processus de formage à la presse d'une partie de survenue de rupture (23) où une rupture s'est produite ou une rupture est susceptible de se produire, dans la pièce formée à la presse (21), et la détermination de la survenue ou de la nonsurvenue d'une microfissure dans une partie de reproduction d'état de contrainte (33) de l'éprouvette (31) ; et
un processus de détermination de rupture (P3) consistant à déterminer, lorsqu'il est déterminé qu'une microfissure s'est produite dans la partie de reproduction d'état de contrainte (33) de l'éprouvette (31) lors du processus d'essai de reproduction d'état de contrainte (P1), qu'une rupture s'est produite dans la pièce formée à la presse (21) lors du processus de formage à la presse, et la détermination, lorsqu'il est déterminé qu'aucune microfissure ne s'est produite dans la partie de reproduction d'état de contrainte (33) de l'éprouvette (31), qu'une rupture s'est produite lors du retour élastique de la pièce formée à la presse (21) après formage à la presse, dans lequel
le processus d'essai de reproduction d'état de contrainte (P1) comporte :
une étape de formage à la presse de reproduction d'état de contrainte (S11) consistant à reproduire un état de contrainte de la partie de survenue de rupture (23) dans la pièce formée à la presse (21) en réalisant un formage à la presse de l'éprouvette (31) ; et
une étape de détermination de survenue/non-survenue de microfissure (S13) de la détermination de survenue/non-survenue d'une microfissure dans la partie de reproduction d'état de contrainte de l'éprouvette ;
l'étape de formage à la presse de reproduction d'état de contrainte (S11) comporte :
une étape d'application de charge de formage (S11a) consistant, à l'aide d'une matrice de formage à la presse (1) comportant un poinçon (3), une matrice (5), une partie d'application de charge de formage (7) qui applique une charge de formage au poinçon (3) ou à la matrice (5), et une partie de maintien de charge de formage (9) qui maintient un état de formage dans lequel la charge de formage est appliquée, à pousser le poinçon (3) vers la matrice (5) par la partie d'application de charge de formage (7) dans un état où l'éprouvette (31) est disposée entre le poinçon (3) et la matrice (5), et à reproduire un état de contrainte de la partie de survenue de rupture (23) de la pièce formée à la presse (21) sur l'éprouvette (31) ; et
une étape de maintien d'état de formage (S11b) consistant à maintenir, par la partie de maintien de charge de formage (9), un état de formage dans lequel un état de contrainte de la partie de survenue de fracture (23) a été reproduit en appliquant la charge de formage à l'éprouvette (31) lors de l'étape d'application de charge de formage (S11a) ; et
l'étape de détermination de survenue/non-survenue de microfissure (S13) comporte une étape d'observation microscopique d'éprouvette (S13b) consistant à déterminer la survenue/non-survenue d'une microfissure en réalisant une observation microscopique d'une section transversale ou d'une surface latérale de la partie de reproduction d'état de contrainte (33) dans l'éprouvette (31) maintenant l'état de formation.

2. Procédé d'évaluation d'une rupture dans une pièce formée à la presse selon la revendication 1, dans lequel la pièce formée à la presse (21) comporte une partie pliée (23) formée par pliage de la tôle métallique, et la partie pliée (23) est la partie de survenue de rupture.

3. Procédé de détermination d'une contre-mesure de rupture dans une pièce formée à la presse pour déterminer une contre-mesure à prendre pour une pièce formée à la presse (21) dans laquelle une rupture s'est produite ou une rupture est susceptible de se produire lors du formage à la presse d'une tôle métallique (11), la détermination étant effectuée à l'aide du procédé d'évaluation d'une rupture dans une pièce formée selon la revendication 1 ou 2, le procédé de détermination d'une contre-mesure de rupture dans une pièce formée comprenant :
un processus de détermination d'une contre-mesure de rupture (P5) consistant à déterminer, lorsqu'il est évalué, dans le processus d'évaluation de rupture (P3), qu'il y a une rupture dans un processus de formage à la presse de la pièce formée à la presse (21), une contre-mesure pour supprimer la survenue d'une microfissure dans la partie de survenue de rupture (23) dans le processus de formage à la presse de la pièce formée à la presse (21) comme contre-mesure pour une rupture de la pièce formée à la presse (21), et à déterminer, lorsqu'il est déterminé qu'il y a une rupture de la pièce formée à la presse (21) lors du retour élastique après formage à la presse, une contre-mesure pour supprimer le retour élastique de la pièce formée à la presse (21) après formage à la presse comme contre-mesure pour la rupture de la pièce formée à la presse (21).
